# EUROPEAN PATENT APPLICATION

(11) **EP 3 928 732 A1**
(43) Date of publication of application: **29.12.2021**
(21) Application number: 21176187.9
(22) Date of filing: 27.05.2021
(51) Int. Cl.: A61C 1/10, A61C 1/12, A61C 8/00

(54) **DENTAL HAND PIECE WITH MEASURING SCALE**

(30) Priority: 23.06.2020 TW 109207947 U; 23.09.2020 TW 109212525 U
(71) Applicant: Chen, Chun-Leon, Da'an Dist 106 Taipei City (TW)
(72) Inventor: CHEN, Chun Leon, 106 Taipei City (TW); CHEN, Nina, Las Vegas, 89146 (US); CHEN, Audree, Las Vegas, 89146 (US); CHEN, Nick, Las Vegas, 89146 (US); CHEN, Alec, Las Vegas, 89146 (US); CHEN, Noland, Las Vegas, 89146 (US)
(74) Representative: Cabinet Chaillot

(57) **Abstract**

The present invention provides a dental hand piece with measuring scale for assisting depth and angle measurement comprising a hand piece main body and a measuring scale. The hand piece main body comprises a hand piece head, a joint section and a holding section; wherein an calibration head is provided under the hand piece head. The joint section is connected to the hand piece head and the holding section, and the measuring scale is disposed on a surface of the hand piece head. Therefore, the dental hand piece with measuring scale for assisting depth and angle measurement provides the dentist with a clear indication of the measuring scale when drilling or grinding, to avoid the problem of excessive or insufficient drilling depth, so as to achieve the stability of the dental implant after the operation; and can avoid damage to body tissues due to incorrect positioning.

## Description

### (a) Technical Field of the Invention

The present invention relates to a dental hand piece for assisting depth and angle measurement, and more particularly to a dental hand piece, including a low speed dental hand piece, a high speed dental hand piece, a laser dental hand piece, a sonic dental hand piece, a polishing dental hand piece and any dental hand piece capable using for teeth, with a measuring scale capable of measuring depth and angle on a hand piece head.

### (b) Description of the Prior Art

During dental implantation, a dental hand piece engaged with drill must be used for drilling the alveolar bone in the patient's mouth. When drilling, the dentist must first evaluate the patient's dentition, implant size and the depth of a hole. The depth of the drilling will lead to the stability of the implant installation, so when drilling, it is necessary to closely observe the depth of the drill to avoid improper dental implant installation.

Currently, the drill used for drilling bones will be marked with a color scale to distinguish the depth. However, when the dentist is drilling, the color scale for distinguishing the depth are covered with blood and water, which makes it difficult for the dentist to see clearly during the process; therefore, it increases surgical risk and dentist pressure. Further, when drilling, the dentist must control the drilling depth with a skilled experience. If it is an osteoporosis patient, the drilling force needs a higher precision, and the conventional drills are more likely to cause the problem of excessive or insufficient drilling depth. Therefore, at present, there is an urgent need for a dental hand piece that assists in depth and angle measurement to improve the above shortcomings and to improve the success rate of dental implants.

In view of this, the inventor has invested a lot of research, development and effort, making breakthroughs and innovations, hoping to solve the current shortcomings with novel technical methods, not only bringing better products to the society, but also promoting industrial development at the same time.

### SUMMARY OF THE INVENTION

The main purpose of the present invention is to provide a dental hand piece with measuring scale for assisting depth and angle measurement, so as to provide the dentist with a clear indication of the measuring scale when drilling, grinding, and drilling alveolar bone, to avoid the problem of excessive or insufficient drilling depth, in order to achieve the stability of dental implants and can avoid damage to body tissues due to incorrect positioning.

To achieve the above object, the present invention provides a dental hand piece with measuring scale comprising a hand piece main body and at least one measuring scale; wherein the hand piece main body has a hand piece head, a joint section and a holding section, the joint section is connected to the hand piece head and the holding section, and an calibration head provided under the hand piece head; wherein the calibration head is a drill or a light beam. Further, the at least one measuring scale disposed on a surface of the hand piece head.

In some embodiments, the measuring scale comprises at least one first measuring scale and at least one second measuring scale, the at least one first measuring scale and the at least one second measuring scale are perpendicular to each other.

In some embodiments, a surface of the hand piece head has a guide line which is disposed around the hand piece head.

In some embodiments, the guide line is parallel to the least one first measuring scale and perpendicular to the least one second measuring scale.

In some embodiments, the drill has at least one third scale which is parallel to the least one first measuring scale and disposed around the surface of the drill

In some embodiments, the at least one first measuring scale and the at least one second measuring scale are convexly disposed on the surface of the hand piece head. Alternatively, the at least one first measuring scale and the at least one second measuring scale are concavely disposed on the surface of the hand piece head.

In some embodiments, the dental hand piece with measuring scale further comprises an auxiliary measuring scale which is disposed from a connection between the hand piece head and the joint section and extends to 10-30% of the length of the joint section.

In some embodiments, the auxiliary measuring scale further comprises at least one fourth measuring scale and at least one fifth measuring scale which are perpendicular to each other.

In some embodiments, the light beam is a light beam acceptable to the human body.

### BRIEF DESCRIPTION OF THE DRAWINGS

The above and other objects, features and other advantages of the present invention will be more clearly understood from the following detailed description taken in conjunction with the accompanying drawings, in which:
FIG. 1A is a schematic view of a dental hand piece with measuring scale according to Embodiment 1 of the present invention;
FIG. 1B is a schematic view of a dental hand piece with measuring scale according to Embodiment 2 of the present invention;
FIG. 2A is a schematic view of a dental hand piece with measuring scale according to Embodiment 3 of the present invention;
FIG. 2B is a schematic view of a dental hand piece with measuring scale according to Embodiment 4 of the present invention;
FIG. 3A is a schematic view of a dental hand piece with measuring scale according to Embodiment 5 of the present invention;
FIG. 3B is a schematic view of a dental hand piece with measuring scale according to Embodiment 6 of the present invention;
FIG. 4 is a schematic view of the use of a dental hand piece for assisting measurement according to Embodiment 7 of the present invention
FIG. 5 is a schematic view of a dental hand piece with measuring scale according to Embodiment 8 of the present invention;
Fig. 6A is a schematic view of a dental hand piece with measuring scale according to Embodiment 9 of the present invention;
Fig. 6B is a schematic view of a first measuring scale of a dental hand piece with measuring scale according to Embodiment 10 of the present invention;
Fig. 7A is a top view of a dental hand piece with measuring scale according to Embodiment 11 of the present invention; and
Fig. 7B is a top view of a dental hand piece with measuring scale according to Embodiment 12 of the present invention.

### DETAILED DESCRIPTION OF THE PREFERRED EMBODIMENTS

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

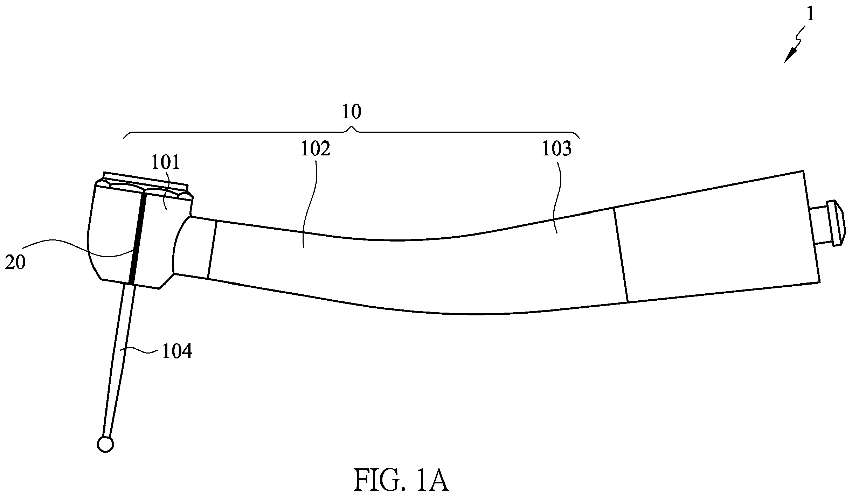

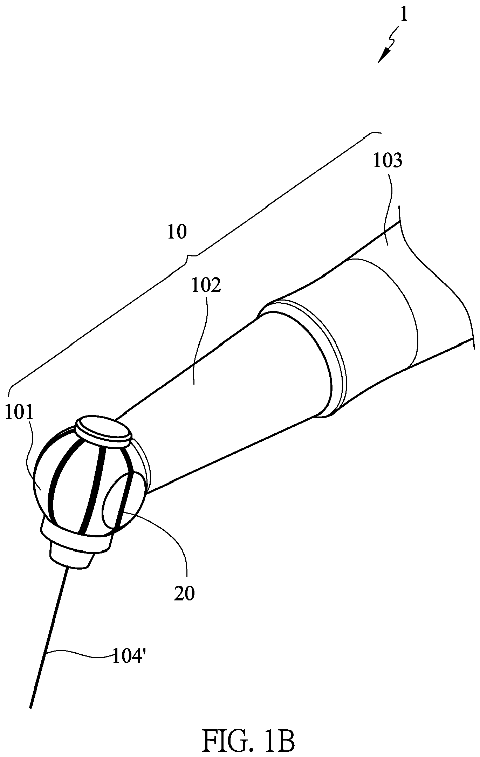

Please refer to FIG. 1A and FIG. 1B, FIG. 1A is a schematic view of a dental hand piece with measuring scale according to Embodiment 1 of the present invention; and FIG. 1B is a schematic view of a dental hand piece with measuring scale according to Embodiment 2 of the present invention.

As shown in FIG. 1A and FIG. 1B, the present invention provides a dental hand piece with measuring scale 1 comprising a hand piece main body 10 and a measuring scale 20; wherein the hand piece main body 10 has a hand piece head 101, a joint section 102 and a holding section 103, and an calibration head is provided under the hand piece head 101; wherein the calibration head of FIG. 1A is a drill 104, and the calibration head of FIG. 1B a light beam 104'. Further, the joint section 102 is connected to the hand piece head 101 and the holding section 103. Furthermore, in FIG. 1A, the measuring scale 20 is disposed on a surface of the hand piece head 101 and parallel to the drill 104; and in of FIG. 1B, the measuring scale 20 is disposed on the surface of the hand piece head 101 and parallel to the light beam 104'. Additionally, the light beam used in the dental hand piece with measuring scale 1 is a light beam acceptable to the human body; wherein the light beam acceptable to the human body can be laser light beam, infrared light beam or visible light beam. The above-mentioned light beams are only for illustration, but the present invention is not limited thereto, all light beams that can be applied to the human body are covered in the present application.

The measurement scale 20 mentioned in the present invention can include straight lines, points, concave points, convex points and so on, which can be used as marks, they are all within the scope of the present invention. The above are only used for illustration, but the present invention is not limited thereto.

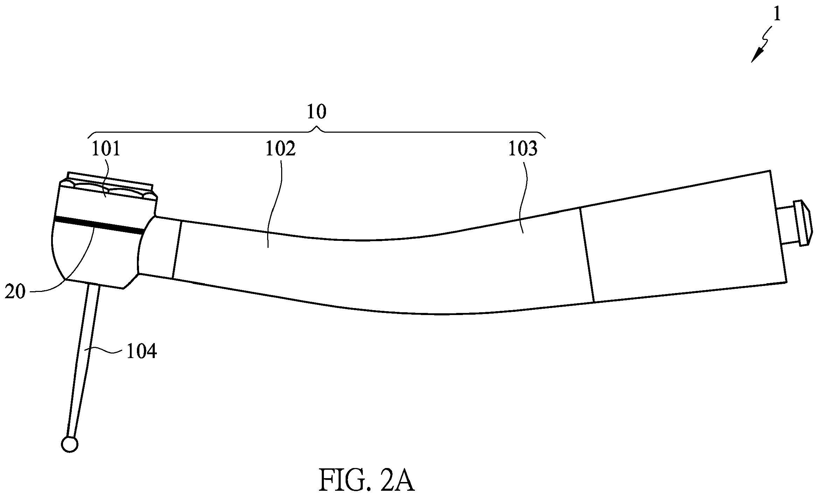

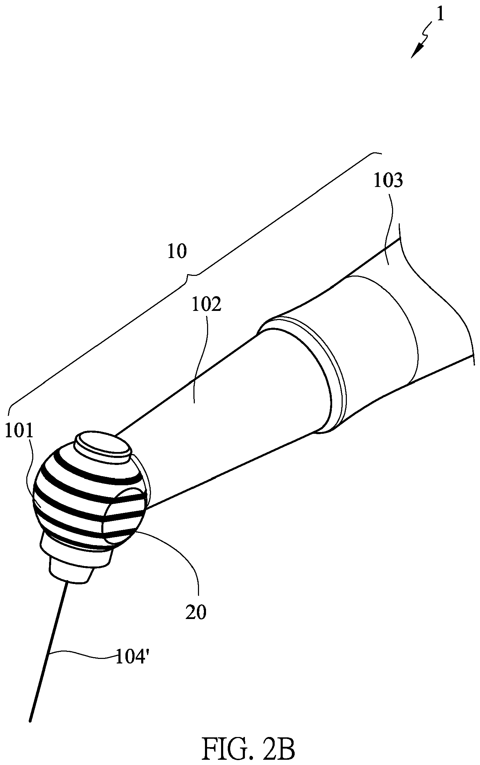

Please refer to FIG. 2A and FIG. 2B, FIG. 2A is a schematic view of a dental hand piece with measuring scale according to Embodiment 3 of the present invention; and FIG. 2B is a schematic view of a dental hand piece with measuring scale according to Embodiment 4 of the present invention.

As shown in FIG. 2A, the Embodiment 3 is substantially the same in structure as the dental hand piece described in the foregoing Embodiment 1, except that the measuring scale 20 provided on the hand piece head 101 is perpendicular to the drill 104 in the Embodiment 3. As shown in FIG. 2B, the Embodiment 4 is substantially the same in structure as the dental hand piece described in the foregoing Embodiment 2, except that the measuring scale 20 provided on the hand piece head 101 is perpendicular to light beam 104' in the Embodiment 4.

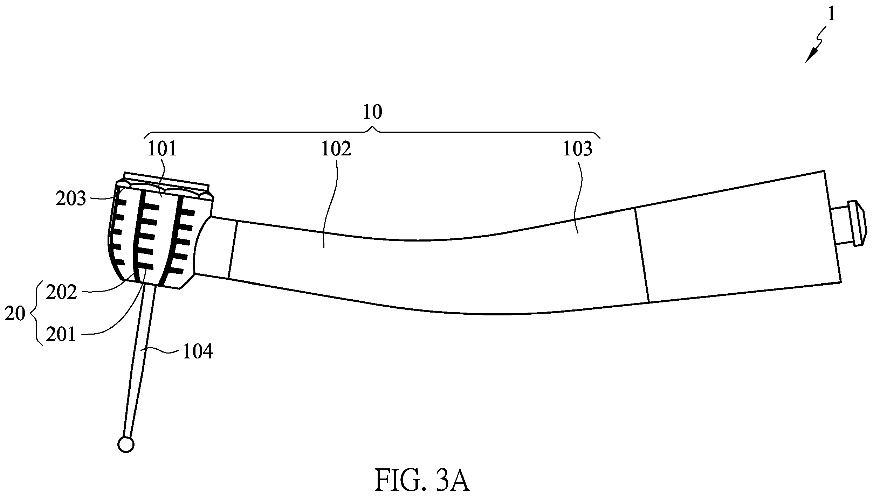

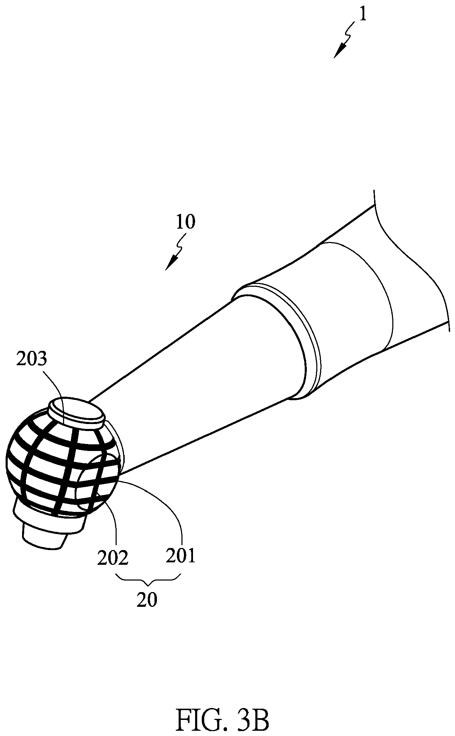

Please refer to FIG. 3A and 3B, FIG. 3A is a schematic view of a dental hand piece with measuring scale according to Embodiment 5 of the present invention; and FIG. 3B is a schematic view of a dental hand piece with measuring scale according to Embodiment 6 of the present invention.

As shown in FIG. 3A, the present invention provides the dental hand piece with measuring scale 1 comprising a hand piece main body 10 and at least one measuring scale 20; wherein the hand piece main body 10 of the present invention is the same as the general dental hand piece, and comprises the hand piece head 101, the joint section 102 and the holding section 103 for holding by a dentist's hand. Further, the drill 104 is engaged with the hand piece head 101 which is used for drilling, grinding, and drilling alveolar bone, and the joint section 102 is connected to the hand piece head 101 and the holding section 103. Furthermore, the measuring scale 20 is disposed on a surface of the hand piece head 101; the measuring scale 20 comprises at least one first measuring scale 201 and at least one second measuring scale 202; and the first measuring scale 201 and the second measuring scale 202 are perpendicular to each other; wherein a surface of the hand piece head 101 has a reference line 203 which is parallel to the first measuring scale 201 and perpendicular to the second measuring scale 202. Therefore, the dentist determines the drilling depth of the alveolar bone or grinding teeth based on the first measuring scale 201 and the second measuring scale 202. As shown in FIG. 3B, the Embodiment 6 is substantially the same in structure as the dental hand piece described in the foregoing Embodiment 5, except that the calibration head is the light beam104' in the Embodiment 6.

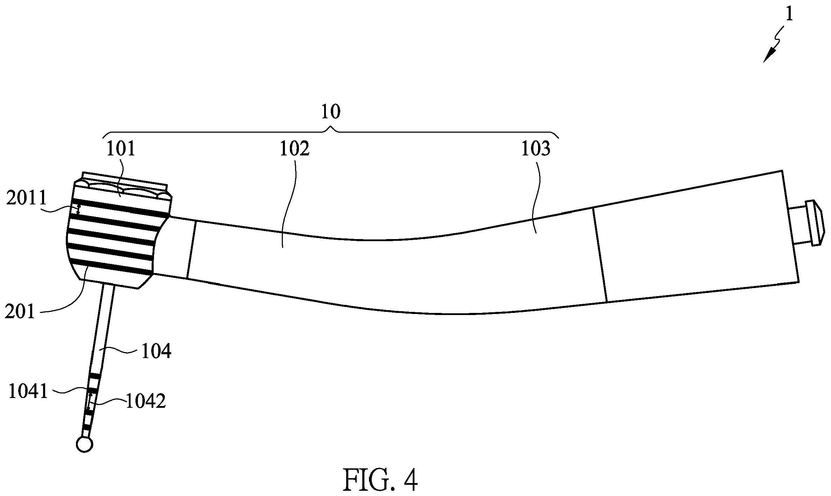

Please refer to FIG. 4, FIG. 4 is a schematic view of the use of a dental hand piece for assisting measurement according to Embodiment 7 of the present invention.

As shown in FIG. 4, the structure of Embodiment 4 is substantially the same as the dental hand piece described in Embodiment 5, except that the second measuring scale is not disposed on the hand piece head 101, and the first measuring scale 201 is disposed around the surface of the hand piece head 101, so that the dentist can clearly see the first measuring scale 201 at different angles during the process of drilling or grinding teeth. Further, third scale 1041 is disposed on the drill 104, the third scale 1041 is parallel to the first measuring scale 201 and disposed around the surface of the drill 104. The dentist can also judge the depth of drilling alveolar bone or the grinding teeth based on the third scale 1041.

Furthermore, as shown in FIG. 4, at least one first vertical interval 1042 is formed between two adjacent the third scales 1041, and at least one second vertical interval 2011 is formed between two adjacent the first measuring scales 201, and the first vertical interval 1042 corresponds to the second vertical interval 2011. That is to say, the size of the first vertical interval 1042 near the tip of the drill 104 is equal to the size of the second vertical distance 2011 on the hand piece head 101. Further, the size of the first vertical interval 1042 between the adjacent third scales 1041 is equal to each other, and the size of each second vertical interval 2011 between the adjacent first scales 201 is equal to each other. In another aspect, the size of first vertical space 1042 between the adjacent third scales 1041 is not equal to each other, and the size of second vertical space 2011 between the adjacent first scales 20 is not equal to each other.

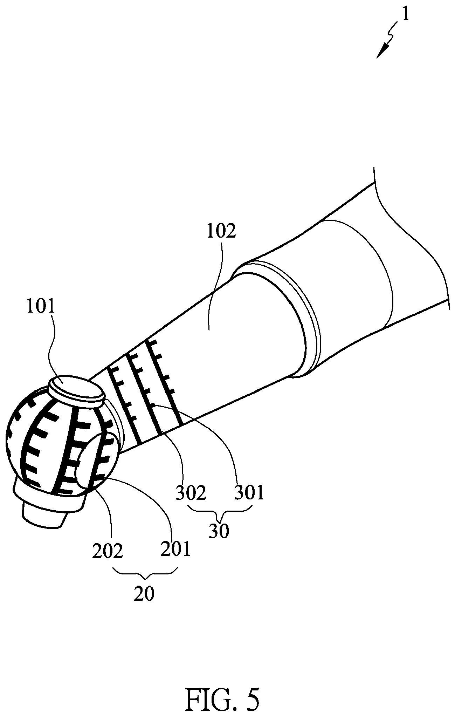

Please refer to FIG. 5, FIG. 5 is a schematic view of a dental hand piece with measuring scale according to Embodiment 8 of the present invention.

As shown in FIG. 5, the dental hand piece with measuring scale 1 in the present application comprises an auxiliary measuring scale 30 which is disposed from a connection between the hand piece head 101 and the joint section 102 and extends to 10-30% of the length of the joint section 102. Further, the auxiliary measuring scale 30 further comprises a fourth measuring scale 301 and a fifth measuring scale 302 which are perpendicular to each other. During the dental treatment process, when blood, water, tongue and adjacent teeth get in the way teeth, the dentist can judge the drilling depth of the alveolar bone by the third measuring scale 301 and the fourth measuring scale 302 on the auxiliary measuring scale 30. Additionally, the measuring scale 20 in FIG. 5 comprises the first measuring scale 201 and the second measuring scale 202, and the first measuring scale 201 in FIG. 5 is different from the arrangement of the first measuring scale 201 in FIG. 3B; wherein the first measuring scale 201 is around the hand piece head 101 in FIG. 3B.

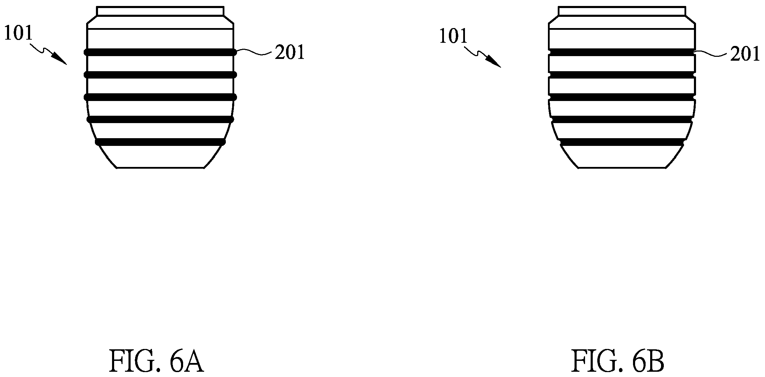

Please refer to FIG. 6A to FIG.6B, Fig. 6A is a schematic view of a first measuring scale of a dental hand piece for assisting measurement with measuring scale according to Embodiment 9 of the present invention; and Fig. 6B is a schematic view of a first measuring scale of a dental hand piece with measuring scale according to Embodiment 10 of the present invention.

As shown in FIG. 6A, the structure of Embodiment 9 is substantially the same as the dental hand piece with measuring scale described in Embodiment 2, except that the first measuring scale 201 is convexly disposed on the surface of the hand piece head 101. When the dentist performs the drilling, the blood and water are filled the patient's mouth, and the first measuring scale 201 or the second measuring scale 202 are covered with the blood and water. Therefore, when the first measuring scale 201 is convexly disposed on the surface of the hand piece head 101, the dentist can see the protrusions of the first measuring scale 201 at different angles to assist the dentist in drilling.

As shown in FIG 6B, the structure of Embodiment 10 is substantially the same as the dental hand piece with measuring scale described in Embodiment 2, except that the first measuring scale is concavely disposed on the surface of the hand piece head 101. When the dentist performs the drilling, the blood and water are splashed on the first measuring scale 201 or the second scale 202. Further, the first measuring scale 201 is not a flat surface but is formed by many concave surfaces; therefore, the reflection of light can be avoided, and the first measuring scale 201 can be clearly seen to facilitate the judgment of the drilling depth of the alveolar bone.

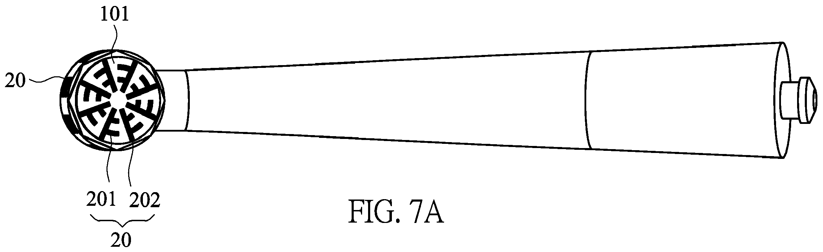

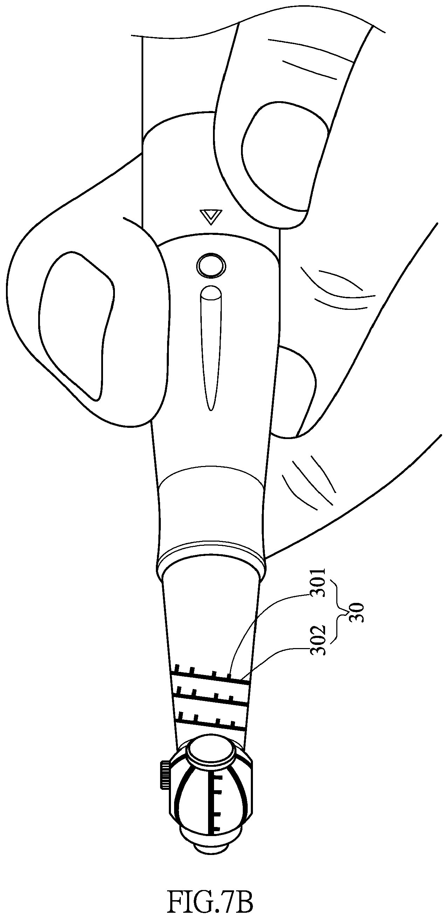

Please refer to FIG. 7A, Fig. 7A is a top view of a dental hand piece with measuring scale according to Embodiment 11 of the present invention; and Fig. 7B is a top view of a dental hand piece with measuring scale according to Embodiment 12 of the present invention.

As shown in FIG 7A, the structure of Embodiment 11 is substantially the same as the dental hand piece described in Embodiment 1, except that the measuring scale 20 is disposed on a top surface of the hand piece head 101, and comprises the first measuring scale 201 and the second measuring scale 202; wherein the first measuring scale 201 and the second measuring scale 202 are perpendicular to each other. As shown in FIG 7B, the structure of Embodiment 12 is substantially the same as the dental hand piece with measuring scale described in Embodiment 2, except that the auxiliary measuring scale 30 is disposed on a top surface of the joint section 102. During the dental treatment process, when teeth, the first measuring scale 201 and the second measuring scale 202 on the hand piece head 101 are covered with blood and water, the dentist can judge the drilling depth of the alveolar bone by the third measuring scale 301 and the fourth measuring scale 302 on the auxiliary measuring scale 30.

The foregoing description, for the purpose of explanation, has been described with reference to specific embodiments; however. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the disclosure to the precise forms disclosed. Modifications and variations are possible in view of the above teachings.

## Claims

1. A dental hand piece with measuring scale, comprising:
a hand piece main body having a hand piece head, a joint section and a holding section, the joint section connected to the hand piece head and the holding section, and an calibration head provided under the hand piece head; and
at least one measuring scale disposed on a surface of the hand piece head;
wherein the calibration head is a drill or a light beam.

2. The dental hand piece with measuring scale mentioned in Claim 1, wherein the measuring scale comprises at least one first measuring scale and at least one second measuring scale, the at least one first measuring scale and the at least one second measuring scale are perpendicular to each other.

3. The dental hand piece with measuring scale mentioned in Claim 2, wherein a surface of the hand piece head has a guide line which is disposed around the hand piece head.

4. The dental hand piece with measuring scale mentioned in Claim 3, wherein the guide line is parallel to the least one first measuring scale and perpendicular to the least one second measuring scale.

5. The dental hand piece with measuring scale mentioned in Claim 1, wherein the drill has at least one third scale which is parallel to the least one first measuring scale and disposed around the surface of the drill.

6. The dental hand piece with measuring scale mentioned in Claim 2, wherein the at least one first measuring scale and the at least one second measuring scale are convexly disposed on the surface of the hand piece head.

7. The dental hand piece with measuring scale mentioned in Claim 2, wherein the at least one first measuring scale and the at least one second measuring scale are concavely disposed on the surface of the hand piece head.

8. The dental hand piece with measuring scale mentioned in Claim 1, further comprising an auxiliary measuring scale which is disposed from a connection between the hand piece head and the joint section and extends to 10-30% of the length of the joint section.

9. The dental hand piece with measuring scale mentioned in Claim 7, wherein the auxiliary measuring scale further comprises at least one fourth measuring scale and at least one fifth scale which are perpendicular to each other.

10. The dental hand piece with measuring scale mentioned in Claim 1, wherein the light beam is a light beam acceptable to the human body.
